# FASCICULE DE BREVET EUROPEEN

(11) **EP 4 490 426 B1**
(45) Date de publication et mention de la délivrance du brevet: **29.07.2026**
(21) Numéro de dépôt: 23719829.6
(22) Date de dépôt: 04.04.2023
(51) Int. Cl.: F17C 3/00

(54) **DISPOSITIF AERONAUTIQUE DE STOCKAGE DE GAZ LIQUEFIE A COLLECTEUR**
AERONAUTISCHE VORRICHTUNG ZUR LAGERUNG VON FLÜSSIGGAS MIT EINEM SAMMLER
AERONAUTICAL DEVICE FOR STORING LIQUEFIED GAS HAVING A COLLECTOR

(30) Priorité: 14.04.2022 FR 2203467
(43) Date de publication de la demande: 15.01.2025
(73) Titulaire: Aresia-Villeneuve, 92390 Villeneuve La Garenne (FR)
(72) Inventeur: SUTTER, Xavier, 92390 Villeneuve La Garenne (FR); BERTOLO, Jean-Christophe, 92390 Villeneuve La Garenne (FR); LEGRAND, Pascal, 92390 Villeneuve La Garenne (FR); PAUN, Florin-Calin, 92390 Villeneuve La Garenne (FR); WALKER, Nicolas, 92390 Villeneuve La Garenne (FR)
(74) Mandataire: Cabinet Netter
(86) Numéro de dépôt international: PCT/FR2023/050477
(87) Numéro de publication internationale: WO 2023/198976

(56) Documents cités:
- WO-A1-2016/112462
- US-A- 5 819 544
- US-A1- 2008 302 111
- US-B2- 10 955 089

## Description

La présente invention concerne le domaine de l'aéronautique.

Depuis ses débuts, l'aéronautique a utilisé des moteurs à essence à haut indice d'octane. Après 1945, le développement du réacteur et de la turbine a conduit à l'utilisation du kérosène, dont la masse moléculaire est plus élevée que celle de l'essence et dont l'inflammabilité est inférieure. Le stockage de ces carburants est effectué dans des réservoirs situés dans les ailes, dans la liaison fuselage-aile ou dans la queue.

La tendance à la réduction des émissions de gaz carbonique a conduit à des moteurs consommant moins. Toutefois les gains sur les émissions de gaz carbonique s'amenuisent au fur et à mesure de la maturité des certaines technologies, notamment la vitesse en extrémité des pales des aubes. Il est apparu de plus en plus souhaitable d'introduire une rupture.

Ainsi sont apparus des projets d'avions à gaz. La combustion de gaz à chaîne carbonée courte ou inexistante le cas échéant avec de l'oxygène, est peu ou non polluante. Par contre, le stockage de gaz H2, O2 ou en C1 ou C2 en raison de la petite taille de la molécule de gaz est difficile et sujet à des risques de fuites.

Au sol, la conservation de tels gaz e est en général effectuée dans des enveloppes sous pression trop lourdes, trop volumineuses et contenant trop d'énergie potentielle de pression pour être embarquées à bord d'un aéronef ou dans des réservoirs cryogéniques soudés et/ou collés. La conservation cryogénique de tels gaz est limitée à une durée limitée proportionnelle au volume stocké.

Par ailleurs, l'hydrogène, le méthane, l'éthane, l'éthylène, l'acétylène ou l'oxygène stocké à l'état liquide n'est pas utilisable par un moteur à combustion interne ou externe ou une pile à combustible. La consommation finale nécessite un état gazeux.

Le besoin est apparu de stocker du gaz de propulsion au sein d'un aéronef et d'extraire du stockage pour sa consommation à bord ledit gaz de propulsion tout en mettant en œuvre les savoir-faire de maintenance aéronautique et en évitant le besoin d'une nouvelle normalisation. En effet, l'élaboration de normes nouvelles est un processus long et consommateur de temps, d'où un risque de générer des retards dans la commercialisation d'avions à gaz. L'acquisition de nouveaux savoir-faire de maintenance est également long, coûteux, voire peut susciter des réticences.

L'invention propose un dispositif de réservoir cryogénique aéronautique de stockage de gaz, de forme générale allongée avec des extrémités arrondies, notamment sphérique ou annulaire autour d'un axe, comprenant un récipient intérieur définissant une chambre de stockage de gaz liquéfié, une enveloppe extérieure contenant le récipient intérieur, une chambre d'isolation définie entre le récipient intérieur et l'enveloppe extérieure, la chambre d'isolation à pression réduite présentant une étanchéité égale ou meilleure que 10⁻⁹ millibar*litre/seconde, un collecteur amovible traversant l'enveloppe extérieure et le récipient intérieur de manière étanche, le collecteur s'étendant sur un diamètre ou une diagonale du récipient intérieur et présentant une extrémité libre voisine d'un fond du récipient intérieur, et une conduite alimentée par le collecteur. Grâce à l'invention, le réservoir cryogénique répond aux exigences de faible masse et de compacité. Le réservoir cryogénique peut fournir du liquide combustible ou comburant sous la forme de gaz liquéfié.

Un dispositif de réservoir cryogénique est connu de US10955089B2.

Dans un mode de réalisation, le dispositif comprend un col souple isolant thermiquement formant interface étanche entre le collecteur d'une part et d'autre part l'enveloppe extérieure et le récipient intérieur, le col étant ménagé autour d'une portion du collecteur, le col traversant la chambre d'isolation pour permettre un démontage du collecteur indépendant de la pression dans la chambre d'isolation. Le collecteur est aisé à démonter et à remonter pour une maintenance rapide.

Dans un mode de réalisation, le dispositif comprend un ensemble bouchon isolant thermiquement monté de manière amovible au collecteur et accessible par l'extérieur. La maintenance est facilitée.

Dans un mode de réalisation, le dispositif comprend un anneau de support monté entre le récipient intérieur et l'enveloppe extérieure. La construction est robuste.

Dans un mode de réalisation, le dispositif comprend une liaison comprenant une concavité axiale dans l'enveloppe extérieure recevant et supportant une saillie axiale du récipient intérieur, et le dispositif comprend des boîtiers supportant l'enveloppe extérieure et entourant lesdites liaisons. La liaison est adaptée aux dilatations susceptibles de se produire.

Dans un mode de réalisation, le col présente une surface extérieure à chevrons annulaires. L'étanchéité est haut niveau.

Dans un mode de réalisation, le col présente une surface extérieure onduleuse. Le chemin de conduction est allongé.

Dans un mode de réalisation, l'enveloppe extérieure comprend un châssis, des panneaux étanches, des joints d'étanchéité résistant à la pression entre le châssis et les panneaux et/ou entre les panneaux, le châssis comprenant des membrures et des longerons. La construction est simple et réparable.

Dans un mode de réalisation, le dispositif comprend un organe anti ballant à l'intérieur du récipient intérieur. Le comportement mécanique, notamment la stabilité, du dispositif est améliorée.

Dans un mode de réalisation, le dispositif comprend un raidisseur à l'intérieur du récipient intérieur, préférablement une entretoise ou un tirant. Le dispositif, notamment le récipient intérieur, peut être allégé. La rigidité est accrue.

Dans un mode de réalisation, un matériau adsorbant l'hydrogène est disposé dans la chambre d'isolation. Une pression basse est maintenue dans la chambre d'isolation.

Dans un mode de réalisation, un détecteur de présence d'hydrogène est installé dans la chambre d'isolation. Un dépassement d'une valeur limite peut faire l'objet d'une alarme.

Dans un mode de réalisation, un ensemble comprend un dispositif comme ci-dessus, un réservoir de stockage temporaire formant un organe de gazéification pour la montée en pression du gaz alimenté par le dispositif, une vanne amont prévue pour être ouverte pour l'écoulement liquide lors d'une phase de remplissage du réservoir de stockage temporaire et fermée hors de la phase de remplissage, une vanne aval étant prévue pour être ouverte pour l'écoulement gazeux lors d'une phase de vidange du réservoir de stockage temporaire et fermée hors de la phase de vidange, la vanne amont et la vanne aval étant fermées lors d'une phase de gazéification, la vanne amont et la vanne aval étant commandées en tout ou rien, et un compresseur disposé en aval de la vanne aval, ledit compresseur étant actif en fin de phase de vidange pour amener la pression dans le réservoir de stockage temporaire à une valeur inférieure à la valeur de la pression dans le dispositif, et un détendeur disposé en aval de la vanne aval, ledit détendeur étant actif en début de phase de vidange pour amener la pression du gaz en sortie à une valeur inférieure à la pression dans le réservoir de stockage temporaire. Le dispositif assure à l'aéronef, par le volume contenu dans le ou les réservoirs temporaires, une autonomie nécessaire indépendamment de l'état du dispositif. Les réservoirs temporaires peuvent être prévus pour une pression de gaz de plusieurs centaines de bars, une pression de gaz choisie étant néanmoins fournie aux organes consommateurs. Les vannes sont fiables. Le réservoir temporaire peut être vidé suffisamment de façon à accroître la quantité de gaz disponible pour les organes consommateurs et amener le réservoir temporaire à une pression en fin de vidange inférieure à la pression courante dans le dispositif. Le remplissage du réservoir temporaire est effectué par manœuvre de vanne cryogénique sous l'effet de la différence de pression. Se passer d'une pompe cryogénique permet un gain de masse et une réduction du risque d'incident.

Dans un mode de réalisation, le réservoir de stockage temporaire est prévu pour une pression de service supérieure à 500 bars.

Dans un mode de réalisation, le dispositif est prévu pour une pression de service inférieure à 8 bars.

D'autres caractéristiques et avantages de l'invention apparaîtront à l'examen de la description détaillée ci-après, et des dessins annexés, sur lesquels :
[Fig.1] illustre de façon schématique en coupe axiale un dispositif selon un aspect de l'invention.
[Fig.2] illustre de façon schématique en coupe transversale un dispositif selon un aspect de l'invention.
[Fig.3] illustre de façon schématique en vue de côté un dispositif démonté selon un aspect de l'invention.
[Fig.4] illustre de façon schématique en vue de côté un dispositif démonté selon un autre aspect de l'invention.
[Fig.5] illustre de façon schématique en perspective un dispositif selon un autre aspect de l'invention.
[Fig.6] illustre de façon schématique en coupe un col selon un aspect de l'invention.
[Fig.7] illustre de façon schématique en coupe un col et un collecteur selon un aspect de l'invention.

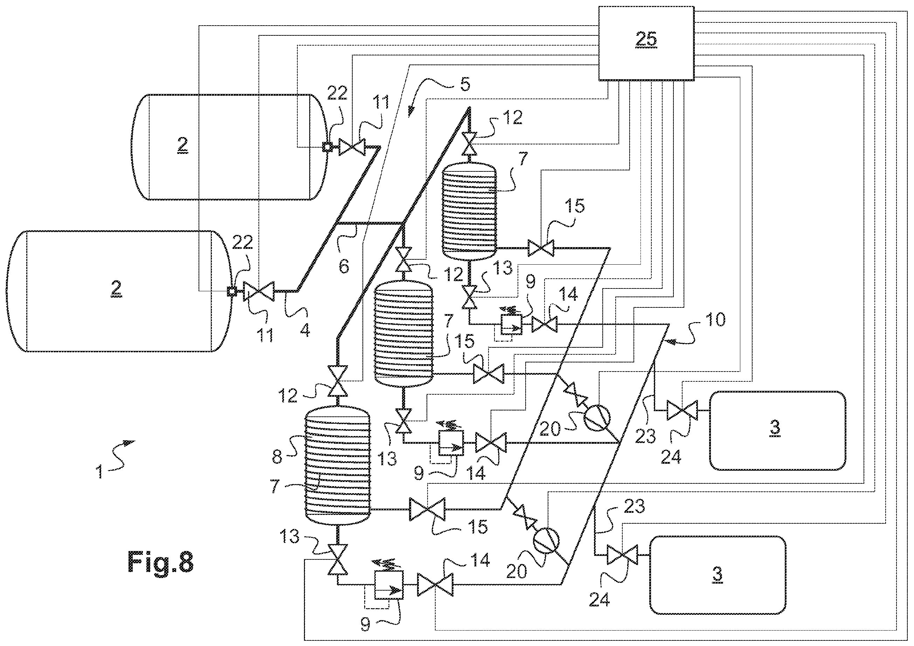

[Fig.8] illustre de façon schématique en perspective un ensemble selon un aspect de l'invention.
[Fig.9] illustre de façon schématique en coupe un col et un collecteur selon un autre aspect de l'invention.
[Fig.10] illustre de façon schématique en coupe un col et un collecteur selon autre un aspect de l'invention.

Les dessins annexés pourront non seulement servir à compléter l'invention, mais aussi contribuer à sa définition, le cas échéant.

Le dispositif aéronautique de stockage de gaz est conçu pour être emporté par un aéronef : avion, drone, hélicoptère, etc.. Le dispositif aéronautique de stockage de gaz contient du liquide et fournit du gaz. En d'autres termes, le gaz est stocké à très basse température sous forme liquide dans un réservoir cryogénique. Un réservoir cryogénique est inapte à résister à des pressions élevées, notamment supérieures à 10 bars.

Le gaz stocké est choisi parmi hydrogène, méthane, éthane, éthylène, acétylène et oxygène.

La Demanderesse entend aussi prendre en compte que la gazéification est un phénomène rapide même dans une atmosphère ambiante à -55°C rencontrée en altitude. A titre de mode de réalisation, l'hydrogène gazeux à 0°C et 1 atmosphère est de masse volumique environ 800 fois plus faible que l'hydrogène liquide à -253°C, donc de volume environ 800 fois plus élevé.

Or les règles de maintenance aéronautique imposent de pouvoir démonter et réparer ou remplacer la plupart des pièces de l'avion. Ainsi, un aéronef est capable de se poser en un lieu quelconque - aérodrome pour un avion, aire de pose pour un hélicoptère - adapté à sa masse et à ses exigences pour l'atterrissage mais non pourvu d'équipements de maintenance spécifiques au modèle de l'aéronef. En cas d'avarie détectée, l'aéronef est configuré pour être réparé, de manière pérenne ou provisoire, ou démonté de façon à remplacer ou à réparer un composant défectueux, conformément aux manuels et documents du constructeur agréés par les autorités de sécurité aérienne. Il est souhaitable que le composant soit aisément accessible par un opérateur de maintenance. En cas de remplacement, il est souhaitable que le composant soit le plus petit possible pour une manutention et un acheminement aisé. En cas de réparation, il est souhaitable que le composant soit réparable par des outils et des procédés éprouvés et courants dans le domaine aéronautique.

Un aéronef fait l'objet de visites d'inspection journalières, hebdomadaires, etc, immobilisant l'aéronef pour une durée à l'inverse de la fréquence.

Or les réservoirs de gaz du domaine industriel terrestre ou du domaine spatial ne sont pas soumis à de tels exigences, notamment ne sont pas conçus pour une telle réparabilité.

La Demanderesse a identifié un besoin de stockage, notamment d'hydrogène, de méthane, d'éthane, d'éthylène, d'acétylène ou d'oxygène, à partir de réservoirs cryogéniques aéronautiques portés par l'aéronef et capables de fournir un liquide combustible en sortie de réservoir cryogénique.

La Demanderesse a identifié un besoin de réservoirs cryogéniques aéronautiques démontables, inspectables selon les modes d'inspection des aéronefs et réparables. En outre, on cherche un réservoir dont le rapport volume utile/volume extérieur soit élevé, dont le rapport masse de gaz contenu/masse totale soit élevé, de haute fiabilité et de haute sécurité.

Comme illustré sur les figures, le dispositif aéronautique de stockage de gaz présente une forme générale allongée avec des extrémités arrondies. Le dispositif aéronautique de stockage de gaz peut être de forme annulaire autour d'un axe longitudinal. Le dispositif aéronautique de stockage de gaz comprend une enveloppe extérieure et un récipient intérieur. Le récipient intérieur forme une chambre de stockage de gaz liquide. Le récipient intérieur est contenu dans l'enveloppe extérieure. De manière générale, le récipient intérieur et l'enveloppe extérieure sont distants l'un de l'autre.

Dans le mode de réalisation représenté, le dispositif aéronautique de stockage de gaz présente une partie centrale cylindrique de révolution et des extrémités hémisphériques. Toutefois, des formes présentant des exceptions à la cylindricité, à l'annularité et/ou à l'hémisphéricité peut être fabriquées.

Chaque réservoir cryogénique est isolé pour contenir du carburant ou comburant liquide à -253°C. Chaque réservoir cryogénique est capable de résister à une pression maximale de service de l'ordre de 6 à 10 bars.

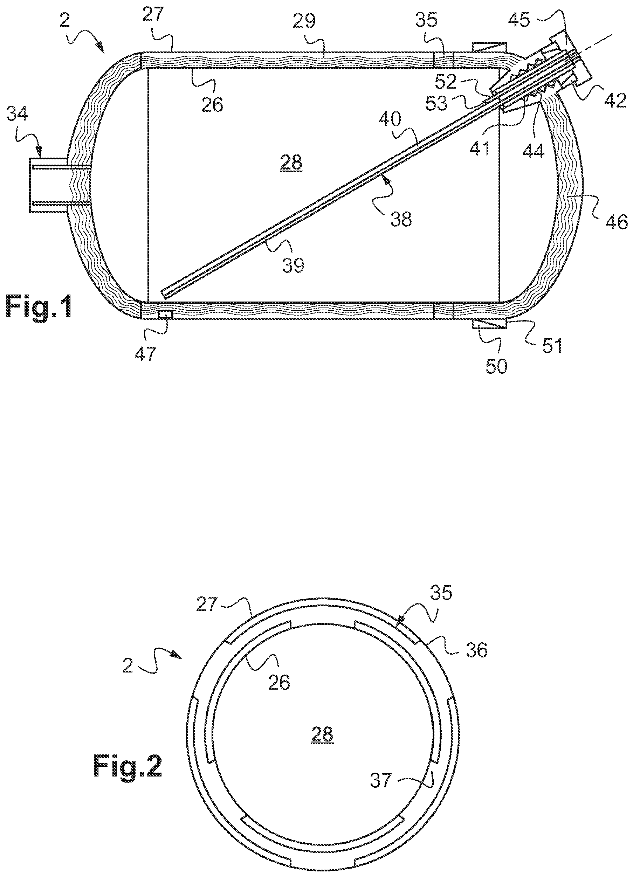

Dans le mode de réalisation illustré sur les figures 1 à 3, le réservoir cryogénique 2 présente une forme allongée, notamment autour d'un axe. Le réservoir cryogénique 2 présente des extrémités bombées et une partie centrale globalement cylindrique de révolution. En variante, le réservoir cryogénique 2 présente une forme sphérique.

Le réservoir cryogénique 2 comprend un récipient intérieur 26 et une enveloppe extérieure 27. Le récipient intérieur 26 définit une chambre de stockage 28 de gaz liquéfié pour contenir un chargement de gaz à température de liquéfaction et un ciel de gaz évaporé. Le récipient intérieur 26 est étanche. Le récipient intérieur 26 est capable de supporter une température de liquéfaction, par exemple -253°C pour l'hydrogène. L'enveloppe extérieure 27 contient le récipient intérieur 26. L'enveloppe extérieure 27 est réalisée en plusieurs parties démontables permettant d'accéder au récipient intérieur 26. L'enveloppe extérieure 27 protège le récipient intérieur 26 contre les chocs. L'enveloppe extérieure 27 assure la tenue structurelle du dispositif aéronautique de stockage de gaz. L'enveloppe extérieure 27 est réalisée en matériau résistant à des températures de moins de -60°C à au moins +80°C.

Entre le récipient intérieur 26 et l'enveloppe extérieure 27, est définie une chambre d'isolation 29. L'isolation dans la chambre d'isolation 29 est assurée par une pression réduite par rapport à la pression atmosphérique. En outre, une matière isolante solide peut être disposée dans la chambre d'isolation 29. La chambre d'isolation 29 à pression réduite présentant une étanchéité à l'hélium égale ou meilleure que 10⁻⁹ millibar*litre/seconde définie entre le récipient intérieur 26 et l'enveloppe extérieure 27. L'étanchéité de la chambre d'isolation 29 englobe l'étanchéité vis-à-vis de l'intérieur du récipient intérieur 26 et l'étanchéité vis-à-vis de l'atmosphère extérieure.

Le récipient intérieur 26 peut être réalisé en alliage métallique soudé. Un exemple d'alliage métallique peut être Al-Cu-Li notamment 2050 ou 2099, Al-Cu notamment 2219, inox notamment 304, 304L, 316, 316L. Le récipient intérieur 26 présente une forme allongée avec deux extrémités bombées entourant un corps. Le corps peut être cylindrique. Le corps peut être de révolution.

L'enveloppe extérieure 27 comprend un châssis 30, des panneaux 31 étanches, des joints d'étanchéité résistant à la pression entre le châssis 30 et les panneaux 31 et/ou entre les panneaux 31. Les panneaux 31 peuvent être assemblés au châssis 30 par vissage.

Le châssis 30 comprend des membrures 32 et des longerons 33. Les membrures 32 peuvent présenter un contour fermé, par exemple annulaire. Les longerons 33 s'étendent longitudinalement. Les longerons 33 se rejoignent aux extrémités de l'enveloppe extérieure 27.

L'enveloppe extérieure 27 comprend un assemblage de panneaux 31. Les panneaux 31 sont réalisés en alliage métallique soudé ou en matériaux composites. Un exemple de matériaux composites peut être de la résine époxy avec des fibres de carbone, des fibres de kevlar et/ou des fibres de verre. Un exemple d'alliage métallique peut être Al-Mg notamment 5086, Al-Mg-Si, notamment 6061, Al-Cu-Li notamment 2195.

Entre les panneaux 31 et le châssis 30 sont prévus des joints d'étanchéité. Les joints d'étanchéité peuvent être métal/métal ou en matériau synthétique, par exemple en élastomère. Dans le cas de joints d'étanchéité en matériau synthétique, des gorges sont ménagées dans les panneaux 31 ou dans le châssis 30 pour loger lesdits joints d'étanchéité. A l'état libre, les joints d'étanchéité dépassent des gorges d'une hauteur inférieure à 10% d'une hauteur desdits joints d'étanchéité. On entend par hauteur le diamètre pour un joint torique.

Le réservoir cryogénique 2 comprend deux liaisons entre l'enveloppe extérieure 27 et le récipient intérieur 26 pour supporter le récipient intérieur 26. Les liaisons sont configurées pour une conduction thermique très faible.

Au moins une des liaisons est à glissement permettant d'accommoder la dilatation différentielle de l'enveloppe extérieure 27 et du récipient intérieur 26. Les liaisons sont portées par l'enveloppe extérieure 27. Une première des liaisons est extrêmale. La liaison extrêmale 34 peut comprendre une saillie centrale à une extrémité du récipient intérieur 26 venant coopérer avec une concavité axiale de l'enveloppe extérieure 27 formant logement pour la protubérance avec glissement axial sur une course de quelques millimètres de manière que la contraction du récipient intérieur 26 au remplissage par un gaz liquéfié et la dilatation du récipient intérieur 26 après vidange du gaz liquéfié soit libre. La liaison extrêmale 34 est configurée pour présenter un chemin de conduction thermique de longueur élevée.

La deuxième liaison est située à distance de l'extrémité opposée à la première liaison. La deuxième liaison entoure le récipient intérieur 26. La deuxième liaison est montée dans la chambre d'isolation 29. La deuxième liaison comprend un anneau de support 35. L'anneau de support 35 est monté entre le récipient intérieur 26 et l'enveloppe extérieure 27. L'anneau de support 35 est monté à distance des liaisons dans la chambre d'isolation 29.

L'anneau de support 35 comprend des secteurs externes 36 en saille radiale vers l'extérieur. Les secteurs externes 36 sont ici au nombre de trois. Les secteurs externes 36 présentent une surface périphérique en contact avec l'alésage de l'enveloppe extérieure 27. Les secteurs externes 36 occupent un angle de l'ordre de 15 à 40°.

L'anneau de support 35 comprend des secteurs internes 37 en saille radiale vers l'intérieur. Les secteurs internes 37 sont ici au nombre de trois. Les secteurs internes 37 présentent une surface convexe en contact avec la périphérie du récipient intérieur 26. Les secteurs internes 37 occupent un angle de l'ordre de 15 à 40°. Les secteurs externes 36 et les secteurs internes 37 sont alternés. Les secteurs externes 36 et les secteurs internes 37 sont angulairement distants les uns des autres. De manière préférée, trois secteurs internes 37 et trois secteurs externes 36 d'environ 20 à 30° sont alternativement répartis et séparés par des zones dépourvues de saillie et occupant un angle d'environ 40 à 30° respectivement. L'anneau de support 35 est maintenu par un frottement suffisant contre le récipient intérieur 26 ou par fixation à demeure.

L'anneau de support 35 est réalisé en matériau composite à faible conduction thermique et à haute résistance mécanique.

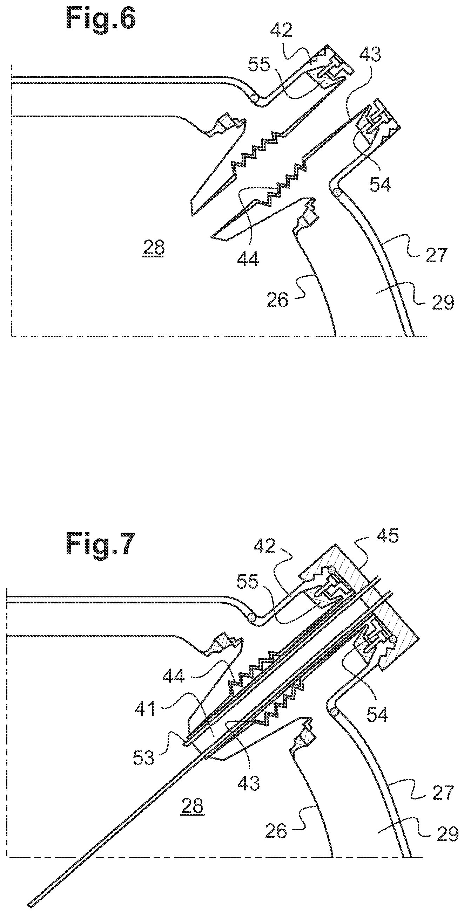

Le réservoir cryogénique 2 comprend un collecteur 38 amovible traversant l'enveloppe extérieure 27 et le récipient intérieur 26 de manière étanche. Le collecteur 38 comprend une canne 39 droite pour prélèvement de gaz liquéfié dans le récipient intérieur 26. La canne 39 est réalisée en matériau isolant. Le collecteur 38 comprend une première extrémité ouverte à l'intérieur du récipient intérieur 26. Le collecteur 38 comprend une deuxième extrémité ouverte à l'extérieur de l'enveloppe extérieure 27. La deuxième extrémité est prévue pour être reliée à une conduite par exemple une conduite de sortie 4, cf. figure 6. Les première et deuxième extrémités sont reliées par une lumière. La première extrémité, à l'état monté, est située à proximité du bas du récipient intérieur 26. La première extrémité est libre. Ainsi, le collecteur 38 soutire du gaz liquéfié. Le soutirage est arrêté lorsque le niveau de liquide est bas. En d'autres termes, le récipient intérieur 26, en fonctionnement, contient une phase gazeuse et une phase liquide. En fin de remplissage, la phase liquide est maximale et la phase gazeuse est à un minimum. En fin de soutirage, la phase liquide est à un minimum, voire absente, et la phase gazeuse est maximale. La phase liquide est soutirée. Le soutirage de la phase liquide par rapport à la phase gazeuse permet des conduites de diamètre nettement plus petit. La compacité des organes en aval du réservoir cryogénique 2 est améliorée. La canne 39 sert également au remplissage avec du gaz liquéfié.

Le collecteur 38 comprend, du côté de la deuxième extrémité, un tampon 41 entourant la canne 39. Le tampon 41 est réalisé en matériau isolant. Le tampon 41 est en saillie à l'extérieur de l'enveloppe extérieure 27. Le tampon 41 peut présenter une zone de préhension pour le démontage, par exemple en maintenance. Le tampon 41 présente un diamètre extérieur supérieur au diamètre de la canne 39. Le tampon 41 forme une tête étanche démontable du réservoir cryogénique 2.

Un ensemble bouchon comprend le tampon 41 de bouchon et un capot 45 de bouchon. Dans le cas d'un appareil type avion ou drone, le réservoir cryogénique 2 peut être monté avec l'ensemble bouchon orienté vers l'avant de l'appareil et l'extrémité libre de la canne 39 vers l'arrière de l'appareil pour mettre à profit l'inclinaison générale de l'appareil de quelques degrés permettant un remplissage plus complet en gaz liquéfié et un soutirage plus complet du gaz liquéfié. Le réservoir cryogénique 2 peut également être monté incliné, notamment au moyen d'un organe de support de hauteur inégale entre l'avant et l'arrière du réservoir cryogénique 2.

En outre, le collecteur 38 comprend une jauge de niveau de liquide 40. La jauge 40 s'étend le long de la canne 39. La jauge 40 est reliée à l'extérieur du réservoir par communication filaire traversant le tampon 41. La jauge 40 fournit en sortie un signal représentatif du niveau de liquide. La jauge peut être capacitive. La précision de la jauge est d' autant plus élevée que le collecteur 38 présente un angle faible par rapport à l'horizontale. En effet, pour une résolution donnée de la jauge et une hauteur donnée du récipient intérieur 26, une longueur accrue du récipient intérieur 26 permet une longueur accrue de la jauge donc une précision accrue. Par exemple, une jauge à 30° par rapport à l'horizontale voit sa précision doublée par rapport à une jauge verticale.

Le collecteur 38 comprend un évent 53 gazeux pour une décharge rapide en cas de surpression. L'évent 53 sert aussi lors du remplissage à évacuer les gaz pour éviter une surpression. L'évent 53 sert lors du soutirage pour une remise en pression par introduction gaz si besoin. L'évent 53 est disposé dans le tampon 41 et débouche dans le récipient intérieur 26 à proximité du tampon 41. L'évent 53 est muni d'un clapet anti retour de liquide.

L'évent 53 est disposé dans le tampon 41 et débouche dans le récipient intérieur 26 à proximité du tampon 41. Ainsi l'évent 53 est relié au ciel gazeux du récipient intérieur 26. L'évent 53 est relié à un conduit traversant le tampon 41. Une soupape à pression d'ouverture inférieure à la pression admissible par le réservoir cryogénique 2 peut être reliée au conduit. Un disque de rupture à pression de rupture inférieure à la pression admissible par le réservoir cryogénique 2 peut être relié au conduit. La soupape et le disque de rupture sont montés en parallèle.

Le collecteur 38 comprend un capteur de température disposé dans le bas du tampon 41 du côté intérieur. Le capteur de température fournit une information de température mesurée dans le récipient intérieur 26.

Le réservoir cryogénique 2 comprend un col 42 isolant thermiquement. Le col 42 présente un alésage. Le col 42 peut être réalisé en métal. Le métal est choisi pour être peu conducteur thermiquement, résistant mécaniquement, souple et étanche à l'hydrogène. Le col 42 est soudé ou vissé avec joint d'étanchéité au récipient intérieur 26. Le col 42 est soudé ou vissé avec joint d'étanchéité à l'enveloppe extérieure 27. Le col 42 est suffisamment souple pour accommoder des différences de dilation entre le récipient intérieur 26 et l'enveloppe extérieure 27. Le col 42 comprend une paroi extérieure fixée au récipient intérieur 26 et à l'enveloppe extérieure 27. Le col 42 comprend une paroi intérieure distante du récipient intérieur 26 et de l'enveloppe extérieure 27. La paroi intérieure peut être fixée à la paroi extérieure aux extrémités du col 42.

La paroi extérieure est tubulaire. La paroi intérieure est tubulaire en forme de soufflet. La paroi intérieure peut être réalisée en tôle métallique d'épaisseur inférieure à la tôle métallique de la paroi extérieure pour augmenter la déformabilité élastique. La paroi intérieure peut présenter une forme de soufflet laquelle accroît l'aptitude à la déformation élastique. Une forme de soufflet, par exemple onduleux, diminue la surface de contact entre la paroi intérieure et le tampon 41, d'où une conduction thermique faible.

Avantageusement, la paroi intérieure à soufflet comprend deux tôles concentriques. Lesdites tôles sont emboîtées l'une dans l'autre et reliées en extrémités. On forme ainsi une double paroi permettant de diminuer le risque de fuite. En cas de percement de l'une des deux tôles, une détection peut être effectuée en appliquant entre les deux tôles une pression de gaz supérieure à la pression dans la chambre d'isolation et inférieure à la pression atmosphérique et en surveillant l'évolution de la pression appliquée. Si ladite pression appliquée diminue, la tôle de grand diamètre présente une fuite avec la chambre d'isolation. Si ladite pression appliquée augmente, la tôle de petit diamètre présente une fuite avec l'alésage du col 42. Le col peut alors être changé. De plus, si seulement l'une des tôles présente une fuite, la chambre d'isolation conserve sa pression basse assurant la faible conduction thermique et le réservoir cryogénique 2 est opérationnel jusqu'à la prochaine opération de maintenance. Dans le cas d'une tôle unique perdant son étanchéité, la chambre d'isolation perd sa propriété de faible conduction thermique et le réservoir cryogénique 2 est vidangé en urgence avec perte de son contenu.

Le col 42 forme un interface étanche entre le collecteur 38 d'une part et d'autre part l'enveloppe extérieure 27 et le récipient intérieur 26. Le col 42 maintient l'étanchéité au gaz entre l'enveloppe extérieure 27 et le récipient intérieur 26, quelle que soit la position du collecteur 38, voire son absence. Le col 42 est fixé de manière étanche dans un perçage ménagé dans l'enveloppe extérieure 27. Le col 42 est fixé de manière étanche dans un perçage ménagé dans le récipient intérieur 26. Le perçage dans l'enveloppe extérieure 27 et le perçage dans le récipient intérieur 26 sont prévus à l'une des extrémités arrondies du réservoir cryogénique 2 à proximité du diamètre extérieur du réservoir cryogénique 2 en partie haute. Le collecteur 38 s'étend au-delà du col 42 vers l'extérieur par une extrémité externe. Le collecteur 38 s'étend au-delà du col 42 vers l'intérieur du réservoir cryogénique 2 vers le bas et vers l'autre des extrémités arrondies du réservoir cryogénique 2.

Le col 42 est ménagé autour d'une portion du collecteur 38. Le col 42 traverse la chambre d'isolation 29 pour permettre un démontage du collecteur 38 indépendant de la pression dans la chambre d'isolation 29. Le col 42 est prévu avec un trou 43 traversant dans lequel est installé le tampon 41 du collecteur 38 de manière démontable. La surface de contact entre le col 42 et le tampon 41 peut être prévue avec une denture 44 annulaire femelle pour augmenter la longueur d'un chemin de fuite et favoriser la tenue mécanique du collecteur 38 dans le col. Ici, la denture 44 présente des chevrons. Le tampon 41 présente à l'état libre une surface extérieure lisse de révolution. Le tampon 41 est adapté au col 42. Un léger jeu entre le soufflet et le tampon 41 peut être prévu. Un déflecteur de liquide est prévu à l'intérieur du col à proximité de la chambre de stockage 28. Le tampon 41 est réalisé en matériau isolant thermiquement. Le tampon 41 peut comprendre une coque résistante et une mousse synthétique isolante dans la coque.

Dans le mode de réalisation des figures 6 et 7, le col 42 est soudé au récipient intérieur 26 autour de sa paroi extérieure. Le col 42 présente une bride superposée à une bride du récipient intérieur 26. La soudure peut être effectuée par faisceau d'électrons dirigé vers les brides. Le col 42 est soudé à l'enveloppe extérieure 27 autour de sa paroi extérieure à distance de la soudure au récipient intérieur 26. La paroi extérieure du col 42 comprend deux parties distinctes et séparées, l'une reliée au récipient intérieur 26, et l'autre reliée à l'enveloppe extérieure 27.

La paroi intérieure relie les deux parties de la paroi extérieure. La paroi intérieure comprend deux tôles concentriques d'épaisseur comprise entre 0,1 et 0,2 mm. Vers l'extérieur, le col 42 comprend une collerette 54 dirigée vers la paroi intérieure. La collerette 54 relie de manière étanche la paroi intérieure et la paroi extérieure. Un joint d'étanchéité 55 est fixé à la collerette 54, notamment par vissage. Le joint d'étanchéité 55 vient en contact avec le tampon 41 du collecteur 38. Ici, la jauge de niveau est absente.

Le réservoir cryogénique 2 comprend un capot 45 monté à demeure au collecteur 38 et accessible par l'extérieur. Le capot 45 est fixé à la canne 39 par vis ou boulons. Le capot 45 est disposé à l'extérieur de l'enveloppe extérieure 27. Le capot 45 est disposé à ladite extrémité externe du collecteur 38. Le capot 45 est étanche.

Le réservoir cryogénique 2 est prévu pour une pression de service inférieure à 8 bars, notamment 6 bars.

Avantageusement, le réservoir cryogénique 2 comprend un organe anti ballant installé à l'intérieur du récipient intérieur 26. L'organe anti ballant comprend un ou plusieurs panneaux ajourés séparant le volume intérieur du récipient intérieur 26 en plusieurs zones. Les jours des panneaux ajourés peuvent présenter une surface de l'ordre de 1 à 5 % de la surface des panneaux ajourés. Les panneaux ajourés peuvent être longitudinaux ou transversaux. Les panneaux ajourés réduisent la vitesse de déplacement du gaz liquéfié dans le récipient intérieur 26 en lors d'accélérations, par exemple au décollage, à l'atterrissage ou lors de turbulences atmosphériques.

Avantageusement, le réservoir cryogénique 2 comprend un raidisseur à l'intérieur du récipient intérieur 26. Le raidisseur comprend au moins une entretoise ou un tirant liant des régions opposées du récipient intérieur 26. Le raidisseur permet d'alléger le reste de la structure du récipient intérieur 26.

Dans la chambre d'isolation 29, est installé un matériau adsorbant 46 l'hydrogène, par exemple un matériau nanoporeux. En cas de fuite légère, on réduit la perte d'isolation liée à l'augmentation de pression dans la chambre d'isolation 29. Après une telle fuite, l'enveloppe extérieure 27 est démontée pour ouverture de la chambre d'isolation 29 et le matériau adsorbant 46 l'hydrogène est retiré pour désorber l'hydrogène, par exemple par chauffage.

Un détecteur de présence d'hydrogène 47 est installé dans la chambre d'isolation 29. On surveille la présence d'hydrogène. En cas de forte fuite, on peut commander la vidange d'urgence du récipient intérieur 26. En cas de légère fuite, on peut anticiper une opération de maintenance. L'opération de maintenance peut comprendre la réparation du récipient intérieur 26 pour remédier à la fuite, le remplacement ou la désorbtion du matériau adsorbant l'hydrogène, le cas échéant, et la remise au vide de la chambre d'isolation 29.

Dans le mode de réalisation illustré sur les figures 1 à 3, l'enveloppe extérieure 27 comprend deux parties séparables 48 et 49. Une première partie 48 comprend une extrémité et un corps. Une deuxième partie 49 comprend une extrémité opposée. La première et la deuxième parties sont reliées de manière étanche et séparable par deux bagues d'étanchéité 50 et 51 offrant des surfaces d'étanchéité métal/métal par interférence. L'interférence peut être cône sur cône, tore sur cône, ou plan sur plan avec le cas échéant un joint torique en métal monté à chaud - notamment en alliage de cuivre - ou en élastomère. L'interférence est assurée par un serrage axial, notamment par des boulons. Les bagues d'étanchéité 50 et 51 sont annulaires.

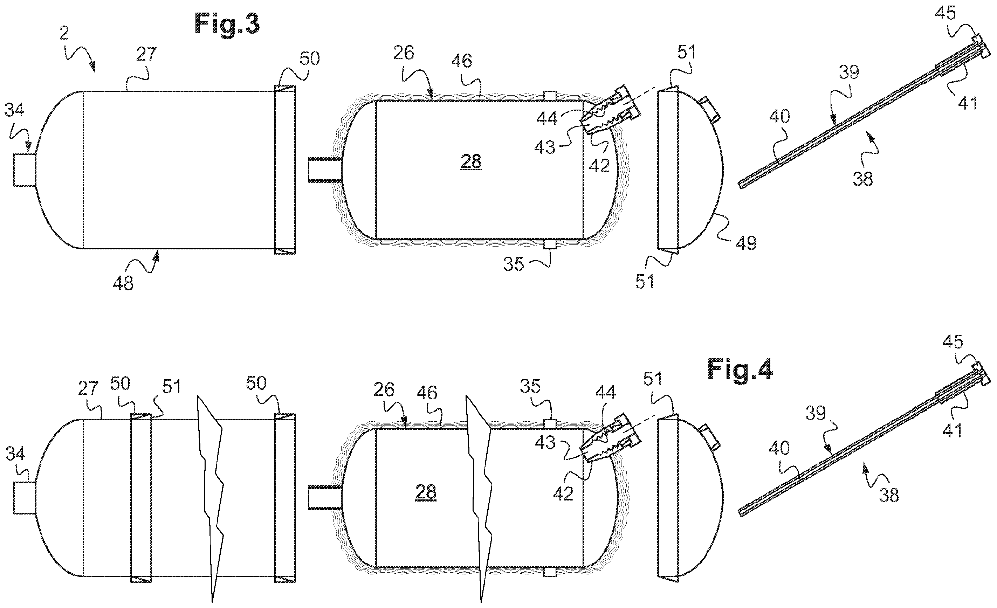

Dans le mode de réalisation illustré sur la figure 4, l'enveloppe extérieure 27 est réalisée en plusieurs tronçons. Deux tronçons sont reliés de manière étanche par des bagues d'étanchéité 50 et 51 comme décrit ci avant. Des tronçons peuvent être standardisés pour différentes contenances de récipient intérieur 26 avec un tronçon d'extrémité, un ou plusieurs tronçons centraux, et un tronçon d'extrémité pourvu du perçage pour le col. Plusieurs anneaux de support 35 peuvent être prévus.

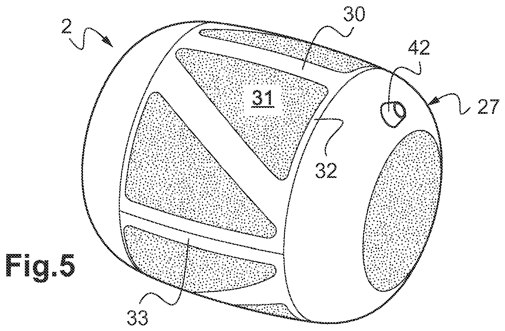

Dans le mode de réalisation illustré sur la figure 5, le châssis 30 de l'enveloppe extérieure 27 comprend des membrures 32 annulaires, des longerons 33 parallèles à l'axe longitudinal et des entretoises diagonales. L'enveloppe extérieure 27 comprend des panneaux 31 de forme générale triangulaire, chacun monté entre une membrure, un longeron et une entretoise, et des panneaux bombés aux extrémités. Les panneaux 31 triangulaires laissent le châssis 30 apparent. Les panneaux bombés recouvrent le châssis 30 au-delà des membrures 32.

Dans le mode de réalisation illustré sur la figure 6, le circuit de distribution 1 comprend une première vanne 11 pour chaque réservoir cryogénique 2. La première vanne 11 est montée sur la conduite de sortie 4. Les premières vannes 11 sont pilotées avec une position ouverte et une position fermée. Les positions intermédiaires des premières vannes 11 sont dynamiques en ce sens que les premières vannes 11 sont en mouvement en passant dans lesdites positions intermédiaires. En d'autres termes, les premières vannes 11 sont tout ou rien. Les premières vannes 11 peuvent être disposées immédiatement en aval des débitmètres 22.

Les premières vannes 11 débouchent dans un distributeur cryogénique 5. Le distributeur cryogénique 5 peut comprendre une conduite commune 6 reliant les sorties des premières vannes 11. Le distributeur est cryogénique en ce sens qu'il voit passer du carburant/comburant liquide.

Le distributeur cryogénique 5 comprend une pluralité de sorties, ici trois. Sur chacune desdites sorties sont montées des deuxièmes vannes 12. Les deuxièmes vannes 12 sont pilotées avec une position ouverte et une position fermée. Les positions intermédiaires des deuxièmes vannes 12 sont dynamiques en ce sens que les deuxièmes vannes 12 sont en mouvement en passant dans lesdites positions intermédiaires. En d'autres termes, les deuxièmes vannes 12 sont tout ou rien. Les deuxièmes vannes 12 sont ici au nombre de trois.

En aval de chaque deuxième vanne 12 est monté un réservoir central de stockage temporaire 7. Trois réservoirs de stockage temporaire 7 sont prévus dans ce mode de réalisation. Chaque réservoir de stockage temporaire 7 sert également de gazéificateur. Une isolation peut être évitée. Chaque réservoir de stockage temporaire 7 reçoit du liquide et fournit en aval du gaz. Une élévation de pression ou étape de gazéification se produit dans chaque réservoir de stockage temporaire 7 entre le remplissage et la vidange. Chaque réservoir de stockage temporaire 7 est capable de résister à une pression maximale de service de l'ordre de 300 à 1000 bars. Chaque réservoir de stockage temporaire 7 est conçu pour fonctionner dans une plage de température allant de -253°C à +60°C. Les réservoirs de stockage temporaire 7 sont biphasiques sur une partie des étapes de fonctionnement et monophasiques gazeux sur les autres étapes de fonctionnement. Chaque réservoir de stockage temporaire 7 peut être équipé d'un organe de chauffage 8.

En aval de chaque réservoir de stockage temporaire 7 est installé une troisième vanne 13 pour fournir du gaz et un détendeur 9 en aval de la troisième vanne 13. Le détendeur 9 écrête la pression pour fournir du gaz à une pression de consommation fixée par le fabricant de l'organe consommateur 3. Le détendeur 9 est actif lorsque la pression dans le réservoir de stockage temporaire 7 est supérieure à la pression de consommation et inactif autrement. La pression de consommation est inférieure à la pression maximale du réservoir de stockage temporaire 7. La pression de consommation est indépendante de la pression maximale des réservoirs cryogéniques. Les troisièmes vannes 13 sont tout ou rien.

En aval de chaque détendeur 9, peut être prévue une quatrième vanne 14 commandée. Les quatrièmes vannes 14 sont tout ou rien.

Les quatrièmes vannes 14 ou les détendeurs 9, selon l'option choisie, débouchent dans un collecteur 10. Le collecteur 10 peut comprendre une conduite reliant les sorties des quatrièmes vannes 14 ou des détendeurs 9. Le collecteur 10 voit passer du gaz. Le collecteur 10 est relié vers l'aval à des conduites d'alimentation 23 vers les organes consommateurs 3. En général, une conduite d'alimentation 23 est prévue pour chaque organe consommateur 3. Chaque conduite d'alimentation 23 peut être équipée d'une vanne d'alimentation 24 pilotée. La vanne d'alimentation 24 est à débit variable.

Le circuit de distribution 1 comprend au moins un compresseur 20 relié au collecteur 10. En général deux compresseurs 20 sont prévus en parallèle pour une redondance. Le compresseur 20 est électrique. Le compresseur 20 peut être équipé d'une vanne amont pilotée. Le compresseur 20 débite du gaz dans le collecteur 10. En particulier, le collecteur 10 est constitué d'une conduite en cas d'unique organe consommateur 3.

En aval de chaque réservoir de stockage temporaire 7 est installé une cinquième vanne 15 pour fournir du gaz et un deuxième collecteur en aval des cinquièmes vannes 15. Le deuxième collecteur est relié au compresseur 20. Les cinquièmes vannes 15 permettent d'isoler les réservoirs de stockage temporaire 7 et le compresseur 20. Les cinquièmes vannes 15 sont commandées. Les cinquièmes vannes 15 sont tout ou rien.

Le compresseur 20 augmente la pression pour fournir du gaz à une pression égale à une pression de consommation fixée par le fabricant de l'organe consommateur 3. La pression de consommation est inférieure à la pression maximale dans le réservoir de stockage temporaire 7. Le compresseur 20 permet de prélever du gaz dans un réservoir de stockage temporaire 7 dont la pression est inférieure à la pression de consommation pour alimenter le collecteur 10 et les organes consommateurs 3. Une vidange plus complète du réservoir de stockage temporaire 7 permet d'augmenter l'autonomie fournie par le gaz contenu dans un réservoir de stockage temporaire 7 ou de réduire le volume du réservoir de stockage temporaire 7.

Une vidange du réservoir de stockage temporaire 7 suffisante pour amener la pression interne du réservoir de stockage temporaire 7 à une valeur inférieure à la pression dans un des réservoirs cryogéniques permet, lors du remplissage succédant à la vidange, de transférer le liquide du réservoir cryogénique vers le réservoir de stockage temporaire 7 par différence de pression. Ainsi, le liquide du réservoir cryogénique est aspiré par le réservoir de stockage temporaire 7 jusqu'à l'équilibre de pression. On peut se passer de pompe cryogénique, d'où un gain de masse et d'énergie consommée.

Le circuit de distribution 1 offre une combinaison d'états individuels de chaque réservoir cryogénique, de chaque réservoir de stockage temporaire 7 et de chaque organe consommateur 3. Plusieurs organes consommateurs 3 peuvent être actifs simultanément. En mode normal, un réservoir cryogénique est en cours de vidange tandis que les autres sont inactifs donc fermés. Toutefois, dans certaines situations, par exemple pour diminuer la pression dans plusieurs réservoirs cryogéniques, un mode particulier peut être prévu dans lequel plusieurs réservoirs cryogéniques sont en cours de vidange. Les réservoirs de stockage temporaire 7 présentent un mode de remplissage, un mode de gazéification, un mode de stockage gazeux et un mode de vidange.

Lorsque l'un des réservoirs cryogéniques est en cours de vidange, la première vanne 11 correspondante est ouverte et les autres premières vannes 11 sont fermées. Lorsque l'un des organes consommateurs 3 est en cours d'alimentation, la vanne d'alimentation 24 correspondante est ouverte.

Lorsque l'un des réservoirs de stockage temporaire 7 est en mode de remplissage, la deuxième vanne 12 reliée audit réservoir de stockage temporaire 7 est ouverte et au moins l'une des premières vannes 11 est ouverte. Les autres deuxièmes vannes 12 sont fermées sauf dans le cas où un remplissage simultané de deux réservoirs de stockage temporaire 7 est exécuté. La troisième vanne 13 reliée audit réservoir de stockage temporaire 7 est fermée. La cinquième vanne reliée audit réservoir de stockage temporaire 7 est fermée.

Lorsque l'un des réservoirs de stockage temporaire 7 est en mode de gazéification, la deuxième vanne 12 reliée audit réservoir de stockage temporaire 7, la troisième vanne 13 reliée audit réservoir de stockage temporaire 7 et la cinquième vanne 15 reliée audit réservoir de stockage temporaire 7 sont fermées. Le mode de gazéification est de courte durée, en particulier en cas d'atmosphère ambiante chaude et/ou de chauffage du réservoir de stockage temporaire 7.

Lorsque l'un des réservoirs de stockage temporaire 7 est en mode de vidange, la deuxième vanne 12 reliée audit réservoir de stockage temporaire 7 est fermée. En première partie de vidange, la pression dans le réservoir de stockage temporaire 7 est supérieure à la pression de consommation. La troisième vanne 13 reliée audit réservoir de stockage temporaire 7 est ouverte, la quatrième vanne 14 correspondante est ouverte et la cinquième vanne reliée audit réservoir de stockage temporaire 7 est fermée. Le gaz subit une réduction de pression dans le détendeur 9 et est fourni au collecteur 10 à la pression de consommation. Le gaz est ensuite consommé par le ou les organes consommateurs 3.

A un instant donné, parmi trois réservoirs de stockage temporaire 7, l'un est en mode de remplissage, un autre en mode de gazéification puis stockage et le troisième en mode de vidange. Comme les modes ont des durées différentes, on peut aussi trouver deux réservoirs de stockage temporaire 7 en mode de remplissage et le troisième en mode de vidange ou l'inverse. On peut aussi trouver deux réservoirs de stockage temporaire 7 en mode de stockage et le troisième en mode de vidange ou l'inverse.

Dans le mode de réalisation, un débitmètre 22 est disposé en sortie de chaque source de carburant/comburant liquide 2. Les débitmètres 22 permettent de connaître avec une précision suffisante, la quantité de liquide fournie à tel réservoir de stockage temporaire 7.

Dans le mode de réalisation, le circuit de distribution 1 comprend une unité de commande 25 recevant une consigne extérieure par exemple provenant des organes consommateurs 3 extérieurs au dispositif aéronautique de stockage ou d'une unité de commande centrale de l'aéronef, et des données de débit liquide provenant des débitmètres 22. L'unité de commande 25 génère et envoie des consignes auxdites premières, deuxièmes, troisièmes, quatrièmes et cinquièmes vannes commandées et aux vannes d'alimentation 24 commandées. Les consignes peuvent être « ouvert » ou « fermé ». L'unité de commande 25 gère ladite combinaison d'états individuels.

En variante, les premières vannes 11 peuvent être remplacées par au moins une vanne multivoies possédant plusieurs entrées et une sortie. Dans ce cas, il est intéressant de prévoir une vanne multivoies à positions mixtes, notamment au moins une position de vidange simultanée de deux ou plus réservoirs cryogéniques 2 pour en réduire la pression en évitant une perte dans l'atmosphère.

En variante, les deuxièmes vannes 12 peuvent être remplacées par au moins une vanne multivoies possédant une entrée et plusieurs sorties, une par réservoir de stockage temporaire 7. Ladite vanne multivoies forme un distributeur.

En variante, les détendeurs 9 sont remplacés par un détendeur 9 unique, les troisièmes vannes 13 débouchant dans le détendeur 9 unique. Dans ce cas, les troisièmes vannes 13 peuvent être remplacées par au moins une vanne multivoies possédant plusieurs entrées et une sortie vers le détendeur. Les quatrièmes vannes 14 sont alors remplacées par une seule quatrième vanne 14, le cas échéant non pilotée.

En variante, les cinquièmes vannes 15 peuvent être remplacées par au moins une vanne multivoies possédant plusieurs entrées, une par réservoir de stockage temporaire 7, et une sortie vers le compresseur 20 ou les compresseurs 20. Ladite vanne multivoies forme un collecteur 10.

Les réservoirs cryogéniques 2 étant sujet à une évaporation à partir du liquide, il peut être prévu un circuit de collecte de gaz dans une partie supérieure des réservoirs cryogéniques 2. Le circuit de collecte peut être actif au-dessus d'une pression seuil par une soupape à pression étalonnée. Le circuit de collecte comprend un compresseur pour réinjecter le gaz en aval, par exemple entre les cinquièmes vannes 15 et le compresseur 20.

En option des débitmètres supplémentaires sont disposés en entrée de chaque réservoir tampon. Une redondance de la mesure de débit de liquide est assurée.

La contenance du dispositif de réservoir cryogénique est comprise entre 10 kg et 10000 kg de gaz, préférablement entre 100 kg et 10000 kg de gaz.

Un réservoir de stockage de stockage temporaire 7 et de gazéification est prévu pour la montée en pression du gaz alimenté par le dispositif. Une vanne amont 12 est prévue pour être ouverte pour l'écoulement liquide lors d'une phase de remplissage du réservoir de stockage de stockage temporaire 7 et fermée hors de la phase de remplissage. Au moins une vanne aval 13, 15 est prévue pour être ouverte pour l'écoulement gazeux lors d'une phase de vidange du réservoir de stockage de stockage temporaire 7 et fermée hors de la phase de vidange. La vanne amont et la vanne aval sont fermées lors d'une phase de gazéification. La vanne amont et la vanne aval sont commandées en tout ou rien. Au moins un compresseur 20 est disposé en aval de la vanne aval 15. Le compresseur 20 est actif en fin de phase de vidange pour amener la pression dans le réservoir de stockage de stockage temporaire 7 à une valeur inférieure à la valeur de la pression dans le dispositif. Un détendeur 9 est disposé en aval de la vanne aval. Le détendeur 9 est actif en début de phase de vidange pour amener la pression du gaz en sortie à une valeur inférieure à la pression dans le réservoir de stockage de stockage temporaire 7.

Le dispositif de réservoir cryogénique ferroviaire, routier ou maritime de stockage de gaz, de forme sphérique ou allongée, notamment autour d'un axe longitudinal, comprend un récipient intérieur définissant une chambre de stockage 28 de gaz liquéfié, une enveloppe extérieure 27 contenant le récipient intérieur et réalisée en plusieurs parties démontables permettant d'accéder au récipient intérieur, l'enveloppe extérieure 27 étant réalisée en matériau résistant à des températures de moins de -60°C à au moins +80°C, une chambre d'isolation 29 définie entre le récipient intérieur et l'enveloppe extérieure, la chambre d'isolation 29 à pression réduite présentant une étanchéité à l'hélium égale ou meilleure que 10⁻⁹ millibar*litre/seconde définie entre le récipient intérieur et l'enveloppe extérieure, deux liaisons dont au moins une à glissement, supportant le récipient intérieur et portées par l'enveloppe extérieure, un anneau de support monté entre le récipient intérieur et l'enveloppe extérieure à distance des liaisons dans la chambre d'isolation, un collecteur 38 amovible traversant l'enveloppe extérieure et le récipient intérieur de manière étanche, et un col 42 souple isolant thermiquement formant interface étanche entre le collecteur 38 d'une part et d'autre part l'enveloppe extérieure et le récipient intérieur, le col 42 étant ménagé autour d'une portion du collecteur 38, le col 42 traversant la chambre d'isolation pour permettre un démontage du collecteur 38 indépendant de la pression dans la chambre d'isolation.

L'ensemble de stockage et de distribution comprend un dispositif de réservoir cryogénique de stockage d'hydrogène, comprenant un récipient intérieur définissant une chambre de stockage de gaz liquéfié, une enveloppe extérieure contenant le récipient intérieur, une chambre d'isolation étanche définie entre le récipient intérieur et l'enveloppe extérieure, un collecteur de gaz liquéfié amovible traversant l'enveloppe extérieure et le récipient intérieur de manière étanche, le collecteur s'étendant sur un diamètre ou une diagonale du récipient intérieur et présentant une extrémité libre voisine d'un fond du récipient intérieur, une conduite de gaz liquéfié alimentée par le collecteur, un réservoir de stockage temporaire formant un organe de gazéification pour la montée en pression du gaz alimenté par le dispositif, une vanne amont prévue pour être ouverte pour l'écoulement liquide lors d'une phase de remplissage du réservoir de stockage temporaire et fermée hors de la phase de remplissage, une vanne aval prévue pour être ouverte pour l'écoulement gazeux lors d'une phase de vidange du réservoir de stockage temporaire et fermée hors de la phase de vidange, la vanne amont et la vanne aval étant fermées lors d'une phase de gazéification, la vanne amont et la vanne aval étant commandées en tout ou rien, et un détendeur disposé en aval de la vanne aval, ledit détendeur étant actif en début de phase de vidange pour amener la pression du gaz en sortie à une valeur inférieure à la pression dans le réservoir de stockage temporaire.

Le collecteur du dispositif est inapte à résister à des pressions élevées, notamment supérieures à 10 bars. Le gaz liquéfié est sensiblement à la même pression dans le réservoir cryogénique, notamment dans la canne 39 du collecteur, et dans la conduite de sortie 4 lors d'un transfert de gaz liquéfié. Le gaz liquéfié est à la même pression dans le réservoir cryogénique, notamment dans la canne 39 du collecteur, et dans la conduite de sortie 4 hors d'un transfert de gaz liquéfié. Le dispositif est dépourvu de pompe. Le gaz liquéfié peut être transvasé par différence de pression entre le réservoir cryogénique et un organe aval.

La canne 39 peut consister en un tube débouchant dans la conduite de sortie 4.

Chaque réservoir de stockage temporaire 7 forme un gazéificateur. Chaque réservoir de stockage temporaire 7 forme un échangeur de chaleur. Chaque réservoir de stockage temporaire 7 forme un échangeur de chaleur qui comprend au moins une entrée de liquide cryogénique et au moins une sortie de gaz. Les réservoirs de stockage temporaire 7 sont dépourvus d'isolation thermique. Les réservoirs de stockage temporaire 7 comprennent une enveloppe simple. Les réservoirs de stockage temporaire 7 sont métalliques et/ou en matériaux composites. Les réservoirs de stockage temporaire 7 sont réalisés en tout ou partie en matériau conducteur. Les réservoirs de stockage temporaire 7 résistent aux températures cryogéniques. Les réservoirs de stockage temporaire 7 résistent aux hautes pressions de service par rapport au réservoir cryogénique à basse pression. Les réservoirs de stockage temporaire 7 sont à courte durée de stockage par rapport aux réservoirs cryogéniques 2 à longue durée de stockage.

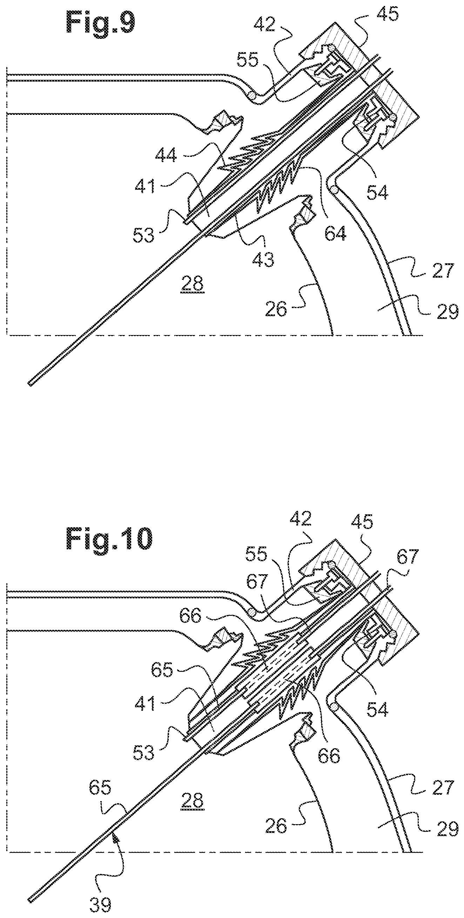

Dans le mode de réalisation de la figure 9, le col 42 présente une surface extérieure 44 à vagues annulaires arrondies 64. La surface extérieure 44 est onduleuse. Par rapport à la figure 7, la longueur développée des vagues 64 est supérieure à celle des chevrons d'où une meilleure isolation par allongement du chemin de conduction.

Dans le mode de réalisation de la figure 10, la canne 39 est réalisée en plusieurs parties formant ensemble un tube pour le prélèvement de gaz liquéfié. La canne 39 comprend une partie inférieure 65 disposée dans la chambre de stockage 28 majoritairement, un manchon intermédiaire 66 disposé dans le tampon 41, et une partie supérieure 67 vers l'extérieur. La partie inférieure 65 est formée par une conduite métallique, par exemple en inox. La partie inférieure 65 est insérée dans le tampon 41 par une extrémité supérieure. La partie supérieure 67 est formée par une conduite métallique, par exemple en inox. La partie supérieure 67 est insérée dans le tampon 41 par une extrémité inférieure. La partie inférieure 65 est distante de la partie supérieure 67. Le manchon intermédiaire 66 est contenu dans le tampon 41. Le manchon intermédiaire 66 est réalisé en matériau présentant une conduction thermique inférieure à la conduction thermique de la partie inférieure 65 et à la conduction thermique de la partie supérieure 67. Le manchon intermédiaire 66 peut être réalisé en résine résistant aux températures cryogéniques, par exemple époxy. Le manchon intermédiaire 66 entoure l'extrémité supérieure de la partie inférieure 65. Le manchon intermédiaire 66 entoure l'extrémité inférieure de la partie supérieure 67. Les pertes thermiques sont faibles.

Le conduit de l'évent 53 est réalisé est de manière similaire à la canne 39 en plusieurs parties présentant des propriétés thermiques différentes, notamment en conduction pour des pertes thermiques faibles. La partie inférieure 65 du conduit de l'évent 53 présente une longueur inférieure à la longueur de la partie inférieure 65 de la canne 39. Le manchon intermédiaire 66 du conduit de l'évent 53 peut être identique au Le manchon intermédiaire 66 de la canne 39. La partie supérieure 67 du conduit de l'évent 53 peut être identique à la partie supérieure 67 de la canne 39.

Les chevrons annulaires présentent un angle par rapport à un plan radial plus faible que sur la figure 6. Ainsi l'angle des chevrons annulaires par rapport à un plan radial est inférieur à 45°. Ledit angle peut être compris entre 5 et 30°. Les chevrons annulaires présentent des branches ondulées autour d'une forme conique de base. Le chemin de conduction est allongé. En variante, des chevrons symétriques formant une denture 44 comme sur la figure 6 ou une surface onduleuse comme sur la figure 9 sont aussi prévus.

## Revendications

1. Dispositif de réservoir cryogénique aéronautique de stockage de gaz, de forme allongée avec des extrémités arrondies, arrondie, sphérique ou annulaire autour d'un axe, comprenant un récipient intérieur (26) définissant une chambre de stockage (28) de gaz liquéfié, une enveloppe extérieure (27) contenant le récipient intérieur (26), une chambre d'isolation (29) définie entre le récipient intérieur (26) et l'enveloppe extérieure (27), un collecteur (38) amovible traversant l'enveloppe extérieure (27) et le récipient intérieur (26) de manière étanche, le collecteur (38) s'étendant sur un diamètre ou une diagonale du récipient intérieur (26) et présentant une extrémité libre voisine d'un fond du récipient intérieur (26), et une conduite alimentée par le collecteur (38), **caractérisé en ce que** le dispositif est destiné à être embarqué à bord, la chambre d'isolation est à pression réduite présentant une étanchéité égale ou meilleure que 10⁹ millibar* litre/seconde, et **en ce que** le dispositif comprend un col (42) souple isolant thermiquement formant interface étanche entre le collecteur (38) d'une part et d'autre part l'enveloppe extérieure (27) et le récipient intérieur (26), le col (42) étant ménagé autour d'une portion du collecteur (38), le col (42) traversant la chambre d'isolation (29) pour permettre un démontage du collecteur (38) indépendant de la pression dans la chambre d'isolation (29).

2. Dispositif selon la revendication 1, comprenant un ensemble bouchon isolant thermiquement monté de manière amovible au collecteur (38) et accessible par l'extérieur.

3. Dispositif selon l'une des revendications précédentes, comprenant un anneau de support (35) monté entre le récipient intérieur (26) et l'enveloppe extérieure (27).

4. Dispositif selon l'une des revendications précédentes, comprenant une liaison (34) comprenant une concavité axiale dans l'enveloppe extérieure (27) recevant et supportant une saillie axiale du récipient intérieur, et le dispositif comprend des boîtiers supportant l'enveloppe extérieure (27) et entourant lesdites liaisons.

5. Dispositif selon l'une des revendications précédentes, dans lequel le col (42) présente une surface intérieure (44) à chevrons annulaires.

6. Dispositif selon l'une des revendications 1 à 4, dans lequel le col (42) présente une surface intérieure (44) onduleuse.

7. Dispositif selon l'une des revendications précédentes, dans lequel l'enveloppe extérieure (27) comprend un châssis (30), des panneaux étanches (31), des joints d'étanchéité résistant à la pression entre le châssis (30) et les panneaux (31) et/ou entre les panneaux (31), le châssis (30) comprenant des membrures (32) et des longerons (33).

8. Dispositif selon l'une des revendications précédentes, comprenant un organe anti ballant à l'intérieur du récipient intérieur et un raidisseur à l'intérieur du récipient intérieur, préférablement une entretoise ou un tirant.

9. Dispositif selon l'une des revendications précédentes, dans lequel un matériau adsorbant l'hydrogène (46) est disposé dans la chambre d'isolation (29), et un détecteur de présence d'hydrogène (47) est installé dans la chambre d'isolation (29).

10. Ensemble comprenant un dispositif selon l'une des revendications précédentes, un réservoir de stockage temporaire (7) formant un organe de gazéification pour la montée en pression du gaz alimenté par le dispositif, une vanne amont (12) prévue pour être ouverte pour l'écoulement liquide lors d'une phase de remplissage du réservoir de stockage temporaire (7) et fermée hors de la phase de remplissage, une vanne aval (13, 15) étant prévue pour être ouverte pour l'écoulement gazeux lors d'une phase de vidange du réservoir de stockage temporaire (7) et fermée hors de la phase de vidange, la vanne amont et la vanne aval étant fermées lors d'une phase de gazéification, la vanne amont et la vanne aval étant commandées en tout ou rien, et un compresseur (20) disposé en aval de la vanne aval (15), ledit compresseur (20) étant actif en fin de phase de vidange pour amener la pression dans le réservoir de stockage temporaire (7) à une valeur inférieure à la valeur de la pression dans le dispositif, et un détendeur (9) disposé en aval de la vanne aval, ledit détendeur (9) étant actif en début de phase de vidange pour amener la pression du gaz en sortie à une valeur inférieure à la pression dans le réservoir de stockage temporaire (7).

## Patentansprüche

1. Luftfahrt-Kryotankvorrichtung zur Speicherung von Gas, die eine längliche Form mit abgerundeten Enden aufweist und abgerundet, kugelförmig oder ringförmig um eine Achse herum ausgebildet ist, umfassend einen Innenbehälter (26), der eine Lagerkammer (28) für verflüssigtes Gas definiert, eine äußere Hülle (27), die den Innenbehälter (26) enthält, eine Isolierkammer (29), die zwischen dem Innenbehälter (26) und der äußeren Hülle (27) definiert ist, einen abnehmbaren Kollektor (38), der die äußere Hülle (27) und den Innenbehälter (26) dicht durchdringt, wobei sich der Kollektor (38) über einen Durchmesser oder eine Diagonale des Innenbehälters (26) erstreckt und ein freies Ende in der Nähe eines Bodens des Innenbehälters (26) aufweist, und eine durch den Kollektor (38) gespeiste Leitung,
**dadurch gekennzeichnet, dass** die Vorrichtung zum Einbau an Bord bestimmt ist, die Isolierkammer einen reduzierten Druck aufweist und dabei eine Dichtheit von mindestens 10⁹ Millibar*Liter/Sekunde aufweist, und dass die Vorrichtung einen thermisch isolierenden flexiblen Kragen (42) umfasst, der eine dichte Schnittstelle zwischen dem Kollektor (38) einerseits und der äußeren Hülle (27) und dem Innenbehälter (26) andererseits bildet, wobei der Kragen (42) um einen Abschnitt des Kollektors (38) herum angeordnet ist, der Kragen (42) die Isolierkammer (29) durchdringt, um eine Demontage des Kollektors (38) unabhängig von dem Druck in der Isolierkammer (29) zu ermöglichen.

2. Vorrichtung nach Anspruch 1, umfassend eine Baugruppe aus einem thermisch isolierenden Stopfen, der abnehmbar an dem Kollektor (38) montiert und von außen zugänglich ist.

3. Vorrichtung nach einem der vorhergehenden Ansprüche, die einen Tragering (35) umfasst, der zwischen dem Innenbehälter (26) und der äußeren Hülle (27) montiert ist.

4. Vorrichtung nach einem der vorhergehenden Ansprüche, umfassend eine Verbindung (34), die eine axiale Mulde in der äußeren Hülle (27) umfasst, die einen axialen Vorsprung des Innenbehälters aufnimmt und trägt, und die Vorrichtung Gehäuse umfasst, die die äußere Hülle (27) tragen und die Verbindungen umgeben.

5. Vorrichtung nach einem der vorhergehenden Ansprüche, wobei der Kragen (42) eine Innenfläche (44) mit ringförmiger Pfeilverzahnung aufweist.

6. Vorrichtung nach einem der Ansprüche 1 bis 4, wobei der Kragen (42) eine wellige Innenfläche (44) aufweist.

7. Vorrichtung nach einem der vorhergehenden Ansprüche, wobei die äußere Hülle (27) einen Rahmen (30), dichte Platten (31), druckfeste Dichtungen zwischen dem Rahmen (30) und den Platten (31) und/oder zwischen den Platten (31) umfasst, wobei der Rahmen (30) Querstreben (32) und Längsträger (33) umfasst.

8. Vorrichtung nach einem der vorhergehenden Ansprüche, umfassend ein Anti-Pendelorgan in dem Inneren des Innenbehälters und eine Versteifung in dem Inneren des Innenbehälters, vorzugsweise ein Abstandsstück oder eine Zugstange.

9. Vorrichtung nach einem der vorhergehenden Ansprüche, wobei in der Isolationskammer (29) ein wasserstoffadsorbierendes Material (46) angeordnet ist und in der Isolationskammer (29) ein Wasserstoff-Anwesenheitsdetektor (47) installiert ist.

10. Baugruppe, umfassend eine Vorrichtung nach einem der vorhergehenden Ansprüche, einen Zwischenspeichertank (7), der ein Begasungsorgan zu dem Druckaufbau des von der Vorrichtung zugeführten Gases bildet, ein vorgeschaltetes Ventil (12), das für den Flüssigkeitsfluss während einer Füllphase des Zwischenspeichertanks (7) geöffnet und außerhalb der Füllphase geschlossen sein soll, wobei ein nachgeschaltetes Ventil (13, 15) vorgesehen ist, um für den Gasfluss während einer Entleerungsphase des Zwischenspeichertanks (7) geöffnet und außerhalb der Entleerungsphase geschlossen zu sein, wobei das vorgeschaltete Ventil und das nachgeschaltete Ventil während einer Begasungsphase geschlossen sind, wobei das vorgeschaltete Ventil und das nachgeschaltete Ventil ein- oder ausgeschaltet werden, und einen nach dem nachgeschalteten Ventil (15) angeordneten Kompressor (20), wobei der Kompressor (20) am Ende der Entleerungsphase aktiv ist, um den Druck im Zwischenspeichertank (7) auf einen Wert unter dem Wert des Drucks in der Vorrichtung zu bringen, und einen Druckminderer (9), der nach dem nachgeschalteten Ventil angeordnet ist, wobei der Druckminderer (9) zu Beginn der Entleerungsphase aktiv ist, um den Druck des Gases am Ausgang auf einen Wert unter dem Druck im Zwischenspeichertank (7) zu bringen.

## Claims

1. Aeronautical cryogenic storage tank device for gas, which is elongate in shape with rounded ends, rounded, spherical or annular about an axis, comprising an internal container (26) defining a storage chamber (28) for liquefied gas, an external casing (27) containing the internal container (26), an insulation chamber (29) defined between the internal container (26) and the external casing (27), a removable collector (38) passing through the external casing (27)and the internal container (26) in a sealed manner, the collector (38) extending over a diameter or diagonal of the internal container (26) and having a free end adjacent to a bottom of the internal container (26), and a conduit fed by the collector (38), **characterised in that** the device is intended to be mounted on-board, the insulation chamber is at reduced pressure having a fluid-tightness greater than or equal to 10⁹ millibar*litre/second, and **in that** the device comprises a thermally insulating, flexible collar (42), forming a fluid-tight interface between the collector (38) on the one hand and the external casing (27) and the internal container (26) on the other hand, the collar (42) being arranged around a portion of the collector (38), the collar (42) passing through the insulation chamber (29) to allow for disassembly of the collector (38) independently of the pressure in the insulation chamber (29).

2. Device according to claim 1, comprising a thermally insulating plug assembly removably mounted on the collector (38) and accessible from the outside.

3. Device according to one of the preceding claims, comprising a support ring (35) mounted between the internal container (26) and the external casing (27).

4. Device according to any one of the preceding claims, comprising a connection (34) comprising an axial concavity in the external casing (27) receiving and supporting an axial projection of the internal container, and the device comprises housings supporting the external casing (27) and surrounding said connections.

5. Device according to one of the preceding claims, wherein the collar (42) has an internal surface (44) with annular V-shaped toothing.

6. Device according to one of claims 1 to 4, wherein the collar (42) has a wavy internal surface (44).

7. Device according to one of the preceding claims, wherein the external casing (27) comprises a frame (30), fluid-tight panels (31), pressure-resistant seals between the frame (30) and the panels (31) and/or between the panels (31), the frame (30) comprising cross-members (32) and longitudinal members (33).

8. Device according to any one of the preceding claims, comprising an anti-sloshing member inside the internal container and a stiffener inside the internal container, preferably a spacer or a tie rod.

9. Device according to one of the preceding claims, wherein a hydrogen-adsorbing material (46) is disposed in the insulation chamber (29) and a hydrogen presence detector (47) is installed in the insulation chamber (29).

10. Assembly comprising a device according to one of the preceding claims, a temporary storage tank (7) forming a gasification member for increasing the pressure of the gas supplied by the device, an upstream valve (12) intended to be opened for liquid flow during a phase of filling the temporary storage tank (7) and closed outside the filling phase, a downstream valve (13, 15) being intended to be opened for the gas flow during a phase of emptying the temporary storage tank (7) and closed outside the emptying phase, the upstream valve and the downstream valve being closed during a gasification phase, the upstream valve and the downstream valve being controlled so as to be completely on or off, and a compressor (20) disposed downstream of the downstream valve (15), said compressor (20) being active at the end of the emptying phase so as to bring the pressure in the temporary storage tank (7) to a value lower than the value of the pressure in the device, and a pressure reducer (9) disposed downstream of the downstream valve, said pressure reducer (9) being active at the beginning of the emptying phase so as to bring the pressure of the gas at the outlet to a value lower than the pressure in the temporary storage tank (7).
